# EUROPÄISCHE PATENTANMELDUNG

(11) **EP 2 865 932 A1**
(43) Veröffentlichungstag der Anmeldung: **29.04.2015**
(21) Anmeldenummer: 13189731.6
(22) Anmeldetag: 22.10.2013
(51) Int. Cl.: F16L 41/14

(54) **Bausatz**

(71) Anmelder: Otto Graf GmbH Kunststofferzeugnisse, 79331 Teningen (DE)
(72) Erfinder: Franke, Stefan, 79346 Endingen (DE)
(74) Vertreter: Grünecker Patent- und Rechtsanwälte PartG mbB

(57) **Zusammenfassung**

Ein Bausatz B zur Montage einer Innengewinde-Flanschhülse 1 umfasst als Basiskomponenten eine aus einer Verlängerung 4 der Innengewinde-Flanschhülse 1 verschraubbare Überwurfmutter 6 und eine mit der Überwurfmutter 6 auf der Verlängerung 4 bis in eine Innengewinde-Flanschhülsen-Halteposition verlagerbare Spreizhülse 7 mit wenigstens einem Stützfuß 8, wobei die Innengewinde-Flanschhülse 1 eine vorbestimmte Montierseite M aufweist und die Überwurfmutter 6 von dieser Montierseite M her verschraubbar ist.

## Beschreibung

Aus einem Prospekt "GARANTIA 2006, So einfach ist Regenwasser-Nutzung" der Firma Otto Graf GmbH, Kunststofferzeugnisse, D-79331 Teningen, Seite 21, Bild rechts oben; Seiten 22 bis 25 (im Internet: www.garantia.de oder info@garantia.de) sind Regenwassertanks bekannt, deren jeder einen eingeschraubten Hahn in Gießkannenhöhe und eine durch einen eingeschraubten Verschlussstopfen verschlossene Winterablassöffnung im Bodenbereich aufweist. Da die Innenseite der Wand des Regenwassertanks in diesen Bereichen fast nicht erreichbar ist, hat die Montage des Hahns bzw. Verschlussstopfens von außen zu erfolgen. Speziell Seite 22 des erwähnten Prospekts, links unten, zeigt in der strukturierten Außenfläche der Wand einen sichtbar eingeformten Flanschbereich, in welchem eine Innengewinde-Flanschhülse z. B. aus Messing, eingesetzt ist.

Bei solchen Tanks, insbesondere Regenwassertanks, ist die Einformung oder Einbringung eines Innengewindes bei der Fertigung aus Kunststoff problematisch. Beim Spritzgießen oder Blasformen wird hierfür eine Ausdrehvorrichtung in das Werkzeug integriert. Die Ausdrehvorrichtung bedeutet höhere Wartungsintensität, ist problemanfällig und verursacht zusätzliche Kosten. Auch läuft der Produktionsprozess wegen der Ausdrehvorrichtung nicht so stabil ab wie ohne diese. Bei Rotationsgussverfahren werden Messingeinlegeteile verwendet, die vor dem Aufschmelzvorgang eingebracht und vom aufschmelzenden Kunststoff umschlossen werden. Hierbei entsteht eine nachteilige Materialkombination, die beispielsweise das Recyceln erschwert. Das Einlegen verlängert die Zykluszeit und unterbricht häufig den Produktionsprozess. Bei Blasverfahren wird eine zum Beispiel metallische Innengewinde-Flanschhülse manuell eingelegt, die zuvor in einem Temperierofen vorzuwärmen und exakt mit dem Produktionsablauf zu koordinieren ist, was fehleranfällig ist. Bei all diesen Vorgangsweisen ist schließlich die Position der Innengewinde-Flanschhülse im Endprodukt von vornherein festgelegt und nicht frei wählbar.

Der Erfindung liegt die Aufgabe zugrunde, einen Bausatz zu schaffen, der unabhängig von dem Herstellungsverfahren eines Behälters oder einer Wand oder dem Material die oben erwähnten Nachteile vermeiden lässt und universell die Einbringung einer Innengewinde-Flanschhülse nachträglich und an beliebiger Position ermöglicht.

Die gestellte Aufgabe wird mit einem Bausatz gemäß Anspruch 1 gelöst.

Mit dem Bausatz ist es möglich, in einer Wand, speziell einer Wand eines Wasserbehälters, unabhängig von dessen Herstellverfahren oder Material und an beliebiger Stelle, die Innengewinde-Flanschhülse nachträglich einzubringen und festzulegen, und zwar von der Montierse her, ohne an der Rückseite der Wand arbeiten zu müssen. Die Wandöffnung ist entweder vorgefertigt oder wird vor der Montage freigelegt. In der montierten Innengewinde-Flanschhülse kann dann eine gewünschte Ausrüstungskomponente festgeschraubt werden, beispielsweise ein Ablasshahn oder dergleichen. Bei Verwendung des Bausatzes ergibt sich höhere Flexibilität für die Produktion des Behälters, weil der Produktionsprozess nicht durch eine Gewindeformung oder die Einformung der Innengewinde-Flanschhülse erschwert oder verlangsamt wird. Dabei ist die Handhabung des Bausatzes zur Montage einfach, bequem und auch von Nichtfachleuten zu bewerkstelligen.

Um die Überwurfmutter bequem von der Montierseite her verschrauben zu können, ist es zweckmäßig, wenn der Bausatz in einer Ausführungsform ein von der Montierseite durch die Innengewinde-Flanschhülse bis in eine Drehhandhabe der durchgängigen Überwurfmutter einführbares, abnehmbares Drehwerkzeug umfasst.

Obwohl es denkbar ist, die Innengewinde-Flanschhülse bei der Montage durch eine entsprechende Passung und die Anzugsspannung oder eine Dichtpaste oder dgl. abzudichten, ist es bei einer weiteren Ausführungsform des Bausatzes zweckmäßig, wenn dieser wenigstens eine außen auf der Innengewinde-Flanschhülse positionierbare Ringdichtung umfasst. Diese Ringdichtung ist so dimensioniert und mit einer Materialspezifikation ausgebildet, dass sie vor allem eine radiale und sichere Abdichtwirkung erzeugt, die gegebenenfalls durch die Anzugsspannung bei der Montage verstärkt wird.

Obwohl die Wandöffnung auf verschiedene Weise vor Ort oder bereits bei der Produktion in der Wand erzeugbar ist, kann bei einer weiteren Ausführungsform des Bausatzes ein auf einen Außendurchmesser der Innengewinde-Flanschhülse oder der Ringdichtung abgestimmtes Bohrwerkzeug zum Freilegen der Wandöffnung an beliebiger Stelle vorgesehen sein.

Obwohl die montierte Innengewinde-Flanschhülse im Regelfall durch eine eingeschraubte Komponente verschlossen wird, kann es zweckmäßig sein, wenn bei einer weiteren Ausführungsform des Bausatzes ein in die Innengewinde-Flanschhülse einschraubbarer Verschlussstopfen vorgesehen ist.

Das Drehwerkzeug und/oder die Ringdichtung und/oder das Bohrwerkzeug und/oder der Verschlussstopfen werden mit dem Bausatz in der jeweiligen für den Anwender optionalen Ausführungsform mitgeliefert.

In einer zweckmäßigen Ausführungsform des Bausatzes sind die Spreizhülse und die Überwurfmutter relativ zueinander drehbar gekoppelt, vorzugsweise über eine axial verrastbare Umfangs-Nut-Feder-Verbindung. Die Spreizhülse und die Überwurfmutter werden separat gefertigt und beispielsweise vor der Auslieferung des Bausatzes ineinander verrastet. Diese Verbindung bietet den Vorteil, dass beim Verschrauben der Überwurfmutter die Spreizhülse nicht verdreht zu werden braucht, sondern nur axial bis in die Halteposition verschoben wird.

Damit der wenigstens eine Stützfuß der Spreizhülse beim Verschrauben der Überwurfmutter ordnungsgemäß in die Halteposition gelangt, ist es zweckmäßig, wenn die Verlängerung der Innengewinde-Flanschhülse am Außenumfang eine konische oder gerundete, in Richtung zur Montierseite ansteigende Spreizrampe für den wenigstens einen Stützfuß umfasst.

Ferner ist es zweckmäßig, wenn die Innengewinde-Flanschhülse an der Montierseite einen Ringflansch und innenseitig einen, beispielsweise vom Ringflansch nur bis in etwa zum Beginn der Verlängerung verlaufenden, Innengewindeabschnitt aufweist. Der Ringflansch legt sich entweder direkt oder über die Ringdichtung an die Außenseite der Wand an. Die Ringdichtung kann eine Rundung oder Strukturierung der Wandaußenseite kompensieren. Der Innengewindeabschnitt kann relativ lang sein und ermöglicht das stabile und dichte Einschrauben einer Ausstattungskomponente wie eines Hahns, Verschlussstopfens oder dgl..

Zweckmäßig sind der Innengewindeabschnitt in der Innengewinde-Flanschhülse, ein Innengewinde der Überwurfmutter und ein Außengewindeabschnitt auf der Verlängerung mit gleichsinnigen Gewindesteigungen ausgebildet, vorzugsweise als Rechtsgewinde. Da zum Einstellen die Halteposition der Spreizhülse die Überwurfmutter dann nach links gedreht werden muss, kann so selbst ein hohes Einschraubdrehmoment einer standardisierten Ausstattungskomponente mit Rechtsgewinde im Innengewindeabschnitt der Innengewinde-Flanschhülse die Halteposition nicht wieder lockern. Natürlich könnten auch nur Linksgewinde vorgesehen sein.

Das zweckmäßig mit dem Bausatz gelieferte Drehwerkzeug weist gegebenenfalls einen Drehgriff mit einem Hinweis auf eine vorgeschriebene Montage-Drehrichtung auf, vorzugsweise bei Rechtsgewinden auf die Montage-Drehrichtung nach links. Durch die Drehrichtung nach links wird bei Rechtsgewinden die Überwurfmutter zur Montierseite hin gezogen, bis die Spreizhülse ihre Halteposition erreicht hat. Wird dann eine Ausstattungskomponente eingeschraubt, dann wird die Halteposition der Spreizhülse selbst bei hohem Einschraubdrehmoment nach rechts nicht wieder gelockert.

Zweckmäßig weist die Ringdichtung am der Montierseite abgewandten Ende eine Einführschräge und zur Montierseite weisend einen umlaufenden Flansch auf, vorzugsweise mit einem dem Außendurchmesser des Ringflansches der Innengewinde-Flanschhülse entsprechenden Außendurchmesser. Die Einführschräge erleichtert das Einführen der Ringdichtung vor der Montage oder zusammen mit dem Bausatz, gegebenenfalls unter Zuhilfenahme eines Gleitmittels, wobei bereits durch das Einführen der Ringdichtung in die Wandöffnung die radiale Dichtwirkung zuverlässig erzeugt wird, und auch der Drehwiderstand der Innengewinde-Flanschhülse in der Ringdichtung so hoch ist, dass das Verschrauben der Überwurfmutter problemlos und zuverlässig ohne Durchdrehen durchführbar ist. Der große Flansch der Ringdichtung resultiert in einem großflächigen Kontaktbereich zwischen dem Ringflansch der Innengewinde-Flanschhülse und der Ringdichtung einerseits und der Ringdichtung und der Außenfläche der Wand um die Wandöffnung andererseits.

Zweckmäßig bestehen zumindest die Grundkomponenten des Bausatzes, vorzugsweise auch das Drehwerkzeug und der Verschlussstopfen, aus Kunststoff. Gegebenenfalls handelt es sich um Spritzguss-Formteile, die kostengünstig, maßgenau und formgetreu in Großserie herstellbar sind. Alternativ könnten zumindest einzelne Grundkomponenten wie beispielsweise die Innengewinde-Flanschhülse aus Metall, Leichtmetall oder einer Legierung wie Messing bestehen.

In einer zweckmäßigen Ausführung kann die aus Kunststoff bestehende Innengewinde-Flanschhülse einen z.B. ringförmigen Innengewinde-Einsatz aus Metall, wie Messing, enthalten, der bei der Formung des Innengewinde-Flanschhülse (z.B. Spritzgießen) eingeformt wird, und gegebenenfalls das gesamte Außengewinde oder zumindest einen das Kunststoff-Innengewinde verlängernden Innengewindeabschnitt aufweist.

Um einen stabilen Sitz der montierten Innengewinde-Flanschhülse sicherzustellen, ist es zweckmäßig, wenn die Spreizhülse mit mehreren in Umfangsrichtung verteilten und durch zur Montierseite offene Zwischenräume separierte Stützfüße aufweist, die elastisch aufspreizbar sind. Vorzugsweise haben die Stützfüße in Umfangsrichtung gerade Endränder und innenseitige Abschrägungen, um beim Verschrauben der Überwurfmutter mit relativ wenig Widerstand die Halteposition zu erreichen, um sich in der Halteposition großflächig abzustützen, z. B. an der Hinterseite der Wand oder an der Ringdichtung, wobei die innenseitigen Abschrägungen mit der Spreizrampe der Innengewinde-Flanschhülse zusammenwirken können.

Schließlich ist es zweckmäßig, wenn die Ringdichtung aus Silikon, Weich-PVC, EPDM oder Gummi hergestellt ist, um hohe Standzeit zu gewährleisten und gegen aggressive Einflüsse und Alterung resistent zu sein.

Anhand der Zeichnungen werden Ausführungsformen des Erfindungsgegenstandes erläutert. Es zeigen:
- Fig. 1: eine Seitenansicht einer ersten Ausführungsform eines Bausatzes in montierbereitem Zustand,
- Fig. 2: eine perspektivische Explosionsdarstellung zu Fig. 1 zur Verdeutlichung von Grundkomponenten des Bausatzes,
- Fig. 3: eine weitere Ausführungsform des Bausatzes in montierbereitem Zustand und einer Seitenansicht,
- Fig. 4: einen Axialschnitt der Ausführungsform von Fig. 3,
- Fig. 5: eine perspektivische Explosionsdarstellung einer weiteren Ausführungsform des Bausatzes,
- Fig. 6: einen Axialschnitt einer weiteren Ausführungsform,
- Fig. 7: einen Vorbereitungsschritt vor der Montage des Bausatzes in einer Wand, und
- Fig. 8: den komplett montierten Bausatz in einer Schnittdarstellung.

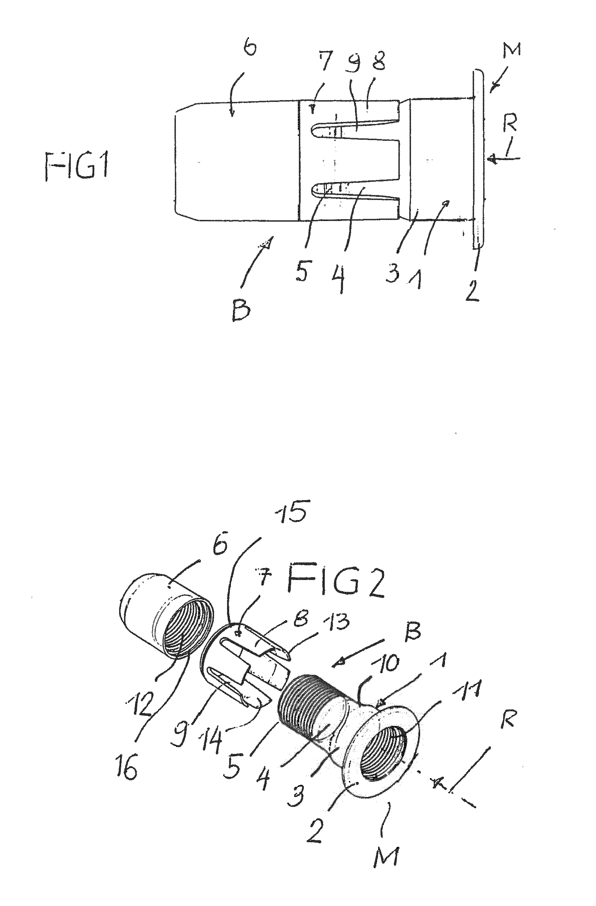

Fig. 1 zeigt Grundkomponenten eines Bausatzes B, in montierbereitem Zustand, und zwar eine Innengewinde-Flanschhülse 1 mit einem an einer Montierseite M platzierten Ringflansch 2, einem vom Ringflansch 2 weg strebenden Hülsenabschnitt 3 und einer hülsenartigen Verlängerung 4, die endseitig einen Außengewindeabschnitt 5 aufweist. Eine weitere Grundkomponente ist eine Überwurfmutter 6. Eine weitere Grundkomponente ist eine Spreizhülse 7 mit mindestens einem Stützfuß 8, in der gezeigten Ausführungsform mehreren in Umfangsrichtung verteilten und durch zur Montierseite M offene Zwischenräumen 9 getrennten Stützfüßen 8.

Der Bausatz B ist vorgesehen zur Montage der Innengewinde-Flanschhülse 1 in einer Wandöffnung einer Wand beispielsweise eines Behälters, insbesondere eines Regenwasserbehälters aus Kunststoff, obwohl der Bausatz B auch in Wänden oder Behältern aus anderen Materialien montiert werden kann. Die Montage erfolgt z.B. von der Montierseite M her mit einer vorbestimmten Montagerichtung R. Die Außendurchmesser der Überwurfmutter 6 und der montierbereiten Spreizhülse 7 sind zum Beispiel in etwa so groß wie der Außendurchmesser des Hülsenabschnitts 3.

Die perspektivische Explosionsdarstellung in Fig. 2 zeigt im Hülsenabschnitt 3 der Innengewinde-Flanschhülse 1 ein Innengewinde 11, das am Ringflansch 2 beginnt und sich z.B. in etwa bis zum Beginn der Verlängerung 4 erstreckt, wobei zwischen dem Hülsenabschnitt 3 und der Verlängerung 4, teilweise auf dieser, eine in Richtung zur Montierseite M ansteigende gerundete oder konische umlaufende Spreizschulter 10 vorgesehen sein kann.

Stützfüße 8 der Spreizhülse 7 haben z.B. in Umfangsrichtung gerade oder runde Endränder 13 und, optional, in diesem Bereich innenseitige Anschrägungen 14. Am in Fig. 2 linksseitigen Ende der Spreizhülse 7 ist eine Umfangsnut 15 geformt.

Die Überwurfmutter 6 besitzt ein Innengewinde 12 und am offenen Ende innen einen einwärts vorstehenden, in Umfangsrichtung verlaufenden Feder-Flansch 16.

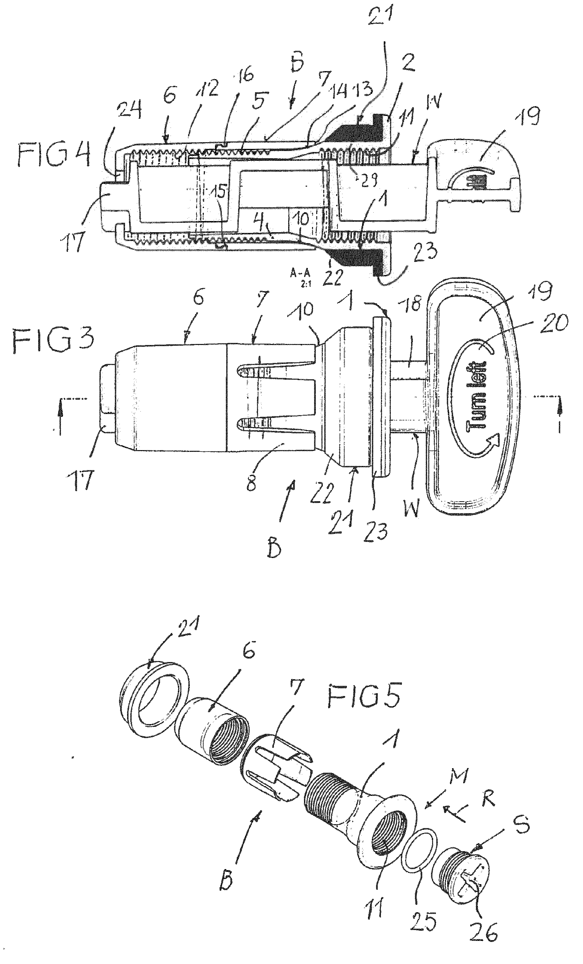

Fig. 3 und 4 zeigen eine weitere Ausführungsform des Bausatzes B, zu dem in dieser Ausführungsform auch ein Drehwerkzeug W gehört, mit welchem die Montage von der Montierseite M her durchführbar ist und das nach der Montage entnehmbar ist. Ferner gehört in dieser Ausführungsform zum Bausatz eine Ringdichtung 21 aus elastischem Material wie Silikon, Weich-PVC, EPDM oder Gummi, oder einem anderen weichelastischen Material.

Das Drehwerkzeug W weist einen Drehansatz 17 auf, der in eine in der axial durchgängigen Überwurfmutter 6 geformte Drehhandhabe 24 zum Eingriff bringbar ist. Ein Schaft 18 des Drehwerkzeugs W trägt einen Drehgriff 19, der, zweckmäßig, einen deutlichen Hinweis 20 auf eine vorbestimmte Montagedrehrichtung tragen kann, beispielsweise einen Richtungspfeil und einen schriftlichen Hinweis.

In der Ausführungsform in Fig. 3 und 4 sind der Innengewindeabschnitt 11, der Außengewindeabschnitt 5 und das Innengewinde 12 Rechtsgewinde, so dass zur Montage die Überwurfmutter 6 nach links verschraubt werden muss, um die Spreizhülse 7 in Fig. 4 nach rechts bis in eine Halteposition entweder an der Ringdichtung 21 oder der hier nicht gezeigten Innenseite der Wand zu verschieben.

Der Federflansch 16 der Überwurfmutter 6 ist in die Umfangsnut 15 der Spreizhülse 7 axial eingerastet, derart, dass die Überwurfmutter 6 und die Spreizhülse relativ zueinander verdrehbar sind und die Spreizhülse 7 beim Verschrauben der Überwurfmutter 6 nur axial verschoben oder gezogen wird, wobei die Stützfüße 8 auf der Spreizrampe 10 aufgleiten und nach außen gespreizt werden. Zur Demontage, falls gewünscht, wird das Drehwerkzeug W nach rechts gedreht, so dass die Überwurfmutter 6 über die Rastverbindung zwischen dem Feder-Flansch 16 und der Umfangsnut 15 die Spreizhülse 7 wieder in die Position gemäß Fig. 4 zieht, bis der Bausatz B aus der Wandöffnung gezogen werden kann, und zwar entweder durch die Ringdichtung 21 oder mit der Ringdichtung 21.

Bei einer alternativen Ausführungsform könnten die Außendurchmesser der Überwurfmutter 6 und/oder der Spreizhülse 7 auch größer sein als der Außendurchmesser des Hülsenabschnitts 3 der Innengewinde-Flanschhülse 1, sofern der Bausatz B mit der Ringdichtung 21 verbaut wird.

Die Ringdichtung 21 weist am der Montierseite M abgewandten Ende eine Einführschräge 22 auf, sowie am anderen Ende einen Flansch 22, dessen Außendurchmesser zweckmäßig dem Außendurchmesser des Ringflansches 2 entspricht.

Fig. 5 zeigt eine weitere Ausführungsform des Bausatzes B, zu dem in dieser Ausführungsform ein Verschlussstopfen S, zweckmäßig aus Kunststoff, sowie eine Dichtung 25, beispielsweise ein O-Ring, gehören, wobei der Verschlussstopfen S eine Drehhandhabe 26 aufweist, die beispielsweise mittels des Drehwerkzeugs W zu benutzen ist, um die montierte Innengewinde-Flanschhülse 1 dicht verschließen zu können, wenn keine oder noch keine Ausstattungskomponente eingeschraubt wird.

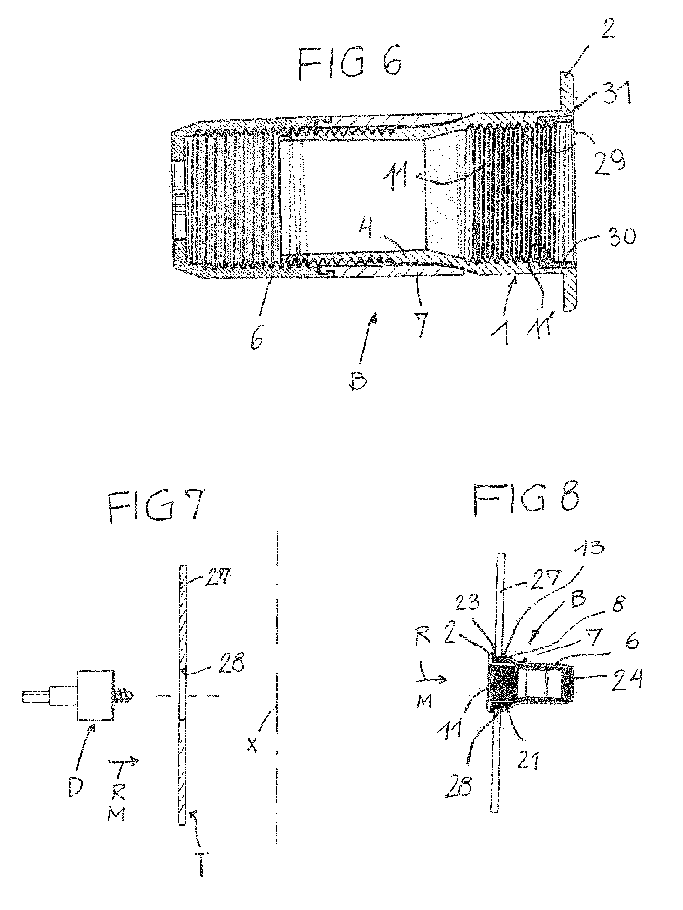

Fig. 6 zeigt eine weitere Ausführungsform des Bausatzes B, ähnlich dem der Fig. 1 und 2, wobei allerdings in der Innengewinde-Flanschhülse 1, z.B. einem Spritzgussteil aus Kunststoff, an der Seite des Ringflansches 2 innen ein ringförmiger Einsatz 29, z.B. aus Messing, eingeformt ist. Der Einsatz 29 hat einen hier das Innengewinde 11 verlängernden Innengewindeabschnitt 11', und, optional, anfangs einen glatten zylindrischen Abschnitt 30, z.B. um das Ansetzen einer Ausstattungs-Komponente zu erleichtern, oder der Dichtung 25 des Verschlussstopfens S einen zylindrischen Dichtbereich zu bieten. Der Außenumfang des Einsatzes 29 kann eine Rändelung 31 aufweisen, die einen Verzahnungseffekt im Kunststoff erzeugt.

Fig. 7 zeigt eine Vorbereitung der Montage des Bausatzes, zu dem in dieser Ausführungsform auch ein Bohrwerkzeug D gehören kann, mit dem in eine Wand 27, beispielsweise eines Regenwassertanks, vorzugsweise aus Kunststoff, eine Wandöffnung 28 für die Montage des Bausatzes B herstellbar ist. Das Bohrwerkzeug D wird auch von der Montageseite und in der Montagerichtung M, R eingesetzt, was zweckmäßig ist, wenn die Hinterweite der Wand 27 nicht ohne Weiteres zugänglich sein sollte, wie beispielsweise in einem Behälter mit der Behälterachse X.

Fig. 8 verdeutlicht schließlich den mit der Ringdichtung 21 in der Wandöffnung 8 dicht montierten Bausatz B, wobei der Ringflansch 2 der Innengewinde-Flanschhülse 1 den Flansch 23 der Ringdichtung 21 gegen die Außenseite der Wand 27 presst, und sich die Stützfüße 8 der Spreizhülse 7 mit ihren Enden 13 beispielsweise an der Rückseite der Wand 27 abstützen. Durch den fertig montierten Bausatz ist Zugang zur Hinterseite der Wand 27 gegeben, da die Innengewinde-Flanschhülse 1 und die Überwurfmutter 6 axial durchgängig sind. In den Innengewindeabschnitt 21 kann entweder der Verschlussstopfen S eingeschraubt werden, um Dichtheit zu erzeugen, oder eine Ausstattungskomponente wie ein Hahn oder dergleichen, um entweder ein Medium in den Tank zu bringen oder aus dem Tank zu entnehmen.

Die Grundkomponenten des Bausatzes B sind zweckmäßig Kunststoffformteile, vorzugsweise Spritzguss-Formteile aus Kunststoff, obwohl nicht ausgeschlossen sein soll, zumindest einzelne Komponenten zum Teil aus Metall, Leichtmetall oder einer Legierung auszubilden.

## Patentansprüche

1. Bausatz (B) zur Montage einer axial durchgängigen Innengewinde-Flanschhülse (1) in einer Wandöffnung (28), insbesondere eines Wasserbehälters (T), wobei der Bausatz (B) als Basiskomponenten eine auf einer Verlängerung (4) der Innengewinde-Flanschhülse (1) verschraubbare, axial durchgängige Überwurfmutter (6) und eine mit der Überwurfmutter (6) auf der Verlängerung (4) bis in eine Innengewinde-Flanschhülsen-Halteposition verlagerbare Spreizhülse (7) mit wenigstens einem Stützfuß (8) umfasst, und wobei die Innengewinde-Flanschhülse (1) eine vorbestimmte Montierseite (M) aufweist und die Überwurfmutter (6) von dieser Montierseite (M) her verschraubbar ist.

2. Bausatz nach Anspruch 1, **dadurch gekennzeichnet, dass** zum Bausatz ein von der Montierseite (M) durch die Innengewinde-Flanschhülse (1) bis in eine Drehhandhabe (27) der Überwurfmutter (6) einführbares, abnehmbares Drehwerkzeug (W) gehört.

3. Bausatz nach Anspruch 1, **dadurch gekennzeichnet, dass** zum Bausatz (B) wenigstens eine außen auf der Innengewinde-Flanschhülse (1) positionierbare Ringdichtung (21) gehört.

4. Bausatz nach Anspruch 1, **dadurch gekennzeichnet, dass** zum Bausatz (B) wenigstens ein auf einem Außendurchmesser der Innengewinde-Flanschhülse (1) oder der Ringdichtung (21) abgestimmtes Bohrwerkzeug (D) zum Freilegen der Wandöffnung (28) gehört.

5. Bausatz nach Anspruch 1, **dadurch gekennzeichnet, dass** zum Bausatz (B) ein in die Innengewinde-Flanschhülse (1) einschraubbarer Verschlussstopfen (S), vorzugsweise mit einem Dichtring (25), gehört.

6. Bausatz nach Anspruch 1, **dadurch gekennzeichnet, dass** die Spreizhülse (7) und die Überwurfmutter (6) relativ zueinander verdrehbar gekoppelt sind, vorzugsweise über eine axial verrastbare Umfangs-Nut-Feder-Verbindung (15, 16).

7. Bausatz nach Anspruch 1, **dadurch gekennzeichnet, dass** die Verlängerung (4) der Innengewinde-Flanschhülse (1) am Außenumfang eine konische oder gerundete, in Richtung zur Montierseite (M) ansteigende Spreiz-Rampe (10) für den wenigstens einen Stützfuß (8) der Spreizhülse (7) aufweist.

8. Bausatz nach wenigstens einem der vorhergehenden Ansprüche, **dadurch gekennzeichnet, dass** der Innengewindeabschnitt (11), ein Innengewinde (12) der Überwurfmutter (6) und ein Außengewindeabschnitt (5) auf der Verlängerung (4) gleichsinnige Gewindesteigungen aufweisen, vorzugsweise als Rechtsgewinde ausgebildet sind.

9. Bausatz nach Anspruch 2, **dadurch gekennzeichnet, dass** das Drehwerkzeug (W) einen Drehgriff (19) mit einem Hinweis (20) auf eine vorgeschriebene Montage-Drehrichtung aufweist, vorzugsweise bei Rechtsgewinden auf die Montage-Drehrichtung nach links.

10. Formteile-Bausatz nach Anspruch 3, **dadurch gekennzeichnet, dass** die Ringdichtung (21) am der Montageseite (M) abgewandten Ende eine Einführschräge (22) und zur Montageseite (M) weisend einen umlaufenden Flansch (23) aufweist, vorzugsweise mit einem dem Außendurchmesser des Ringflansches (2) entsprechenden Außendurchmesser.

11. Bausatz nach wenigstens einem der vorhergehenden Ansprüche, **dadurch gekennzeichnet, dass** zumindest die Grundkomponenten, vorzugsweise auch das Drehwerkzeug (D) und der Verschlussstopfen (S), aus Kunststoff bestehen, vorzugsweise Spritzguss-Formteile sind.

12. Bausatz nach Anspruch 11, **dadurch gekennzeichnet, dass** die Innengewinde-Flanschhülse (1) innen einen eingeformten ringförmigen Einsatz (29) aus Metall wie Messing enthält, der das Innengewinde (11, 11') der Flanschhülse (1) enthält oder ergänzt.

13. Bausatz nach Anspruch 1, **dadurch gekennzeichnet, dass** die Spreizhülse (7) mehrere in Umfangsrichtung verteilte und durch zur Montierseite (M) offene Zwischenräume (9) separierte Stützfüße (8), vorzugsweise mit in Umfangsrichtung geraden oder gerundeten Endrändern (13) und innenseitigen Abschrägungen (14), aufweist.

14. Bausatz nach Anspruch 3, **dadurch gekennzeichnet, dass** die Ringdichtung (21) aus Silikon, Weich-PVC, EPDM oder Gummi hergestellt ist.
